# EUROPÄISCHE PATENTANMELDUNG

(11) **EP 3 026 409 A1**
(43) Veröffentlichungstag der Anmeldung: **01.06.2016**
(21) Anmeldenummer: 15195254.6
(22) Anmeldetag: 18.11.2015
(51) Int. Cl.: G01K 3/04, G01K 11/12

(54) **VERPACKUNG FÜR EIN LEBENSMITTELPRODUKT**

(30) Priorität: 28.11.2014 DE 102014117482
(71) Anmelder: Netzgesellschaft Düsseldorf mbH, 40233 Düsseldorf (DE)
(72) Erfinder: LANGE, Hans Bernhard, 40591 Düsseldorf (DE)
(74) Vertreter: Taruttis, Tilman

(57) **Zusammenfassung**

Verpackungsmittel (1) für ein Lebensmittelprodukt aufweisend mindestens einen zweidimensionalen grafischen Code (2) zur Speicherung und Bereitstellung von Produktinformationen (6, 7) über das Lebensmittelprodukt, wobei der zweidimensionale grafische Code (2) zumindest teilweise mindestens einen vorzugsweise irreversibel veränderlichen Farbstoff (3) und eine Aktivierungsbarriere (4) umfasst, wobei der mindestens eine veränderliche Farbstoff (3) dazu eingerichtet ist, seine Sichtbarkeit in Abhängigkeit einer einwirkenden Temperatur zu verändern, wenn die Aktivierungsbarriere (4) deaktiviert wurde.

## Beschreibung

Die Erfindung betrifft eine Verpackung, welche vorzugsweise für ein Lebensmittelprodukt geeignet ist, mit einer Kennzeichnung, anhand welcher die Frische des in der Verpackung enthaltenen Lebensmittelprodukts überwacht werden kann.

Für die Frische eines Lebensmittelprodukts ist es regelmäßig erforderlich, dass eine Kühlkette eingehalten wird. Der Begriff "Kühlkette" bedeutet, dass ein Lebensmittelprodukt ununterbrochen auf dem Weg vom Produzenten zum Endverbraucher ununterbrochen gekühlt wurde. Wenn eine vorgeschriebene Kühlung auf diesem Weg auch nur zeitweise nicht eingehalten wurde, spricht man von einer "unterbrochenen Kühlkette". Die Einhaltung der Kühlkette kann die Einhaltung unterschiedlicher Grenztemperaturen bedeuten, die das Lebensmittelprodukt in den einzelnen Phasen seiner Herstellung und seines Transports nicht überschreiten darf um die Kühlkette einzuhalten. Diese Grenztemperaturen können einerseits absolut sein. Der Begriff "absolut" meint hier, dass das Lebensmittelprodukt niemals (auch nicht für einen sehr kurzen Zeitraum) einer Temperatur über einer bestimmten Grenztemperatur ausgesetzt sein darf. Die Grenztemperaturen können aber auch relativ und zeitraumbezogen sein. Das bedeutet, dass das Lebensmittelprodukt für eine bestimmte Zeitspanne eine Grenztemperatur nicht überschreiten darf. Ein Beispiel hierfür wäre eine Grenztemperatur von 10 °C, die maximal für einen Zeitraum von beispielsweise 10 Minuten überschritten werden darf. Es sind auch gestaffelte Grenztemperaturen möglich. Beispielsweise ist es denkbar, dass eine Kühlkette als eingehalten gilt, wenn ein Lebensmittelprodukt für 5 Minuten einer Temperatur von mehr als 5 °C ausgesetzt ist und die Kühlkette ebenfalls eingehalten ist, wenn das Lebensmittel für 1 Minute einer Temperatur von mehr als 10 °C ausgesetzt ist, während die Kühlkette nicht als eingehalten gilt, wenn wahlweise die Grenztemperatur von 5 °C in einem Zeitraum von 5 Minuten oder die Grenztemperatur von 10 °C in einem Zeitraum von 1 Minute überschritten wurde.

Es sind ganz unterschiedliche Kombinationen von absoluten Grenztemperaturen, relativen Grenztemperaturen und gestaffelten Grenztemperaturen im Rahmen der Definition einer Kühlkette möglich. Dies hängt vom jeweiligen Lebensmittelprodukt und den entsprechenden Anforderungen des Verkehrs insbesondere der Endverbraucher ab.

Es hat sich in der Vergangenheit herausgestellt, dass die Einhaltung einer Kühlkette für ein Lebensmittelprodukt regelmäßig aufwendig nachzuvollziehen ist. Aus diesem Grund sind Kennzeichnungen auf der Verpackung des Lebensmittelprodukts vorteilhaft, an welchen die Einhaltung einer Kühlkette genau erkannt werden kann. Solche Kennzeichnungen sind beispielsweise mit thermochromen Markierungen möglich, welche ihre Farbe verändern, wenn bestimmte Grenztemperaturen überschritten wurden. Derartige thermochrome Markierungen sind grundsätzlich bekannt. Es hat sich jedoch herausgestellt, dass die Verwendung von derartigen thermochromen Markierungen alleine häufig nicht ausreichend ist, um eine Information über die Einhaltung einer Kühlkette bereitzustellen, die den Anforderungen eines professionellen Anwenders oder eines Endverbrauchers genügt. Für einen Endverbraucher sollte die Information insbesondere leicht verständlich sein. Für einen professionellen Anwender steht regelmäßig eine automatisierte/maschinelle Lesbarkeit der Information im Vordergrund. Aus diesem Grund sind verbesserte Methoden zur Kennzeichnung von Lebensmittelprodukten wünschenswert, die die Überwachung einer Kühlkette des Lebensmittelprodukts ermöglichen.

Ausgehend von diesem Stand der Technik ist es Aufgabe der hier vorliegenden Erfindung, ein verbessertes Verpackungsmittel für ein Lebensmittelprodukt vorzuschlagen, welches die Überwachung einer Kühlkette des Lebensmittelprodukts ermöglicht.

Diese Aufgaben werden gelöst mit einem Verpackungsmitteln gemäß den Merkmalen des Anspruchs 1. Weitere vorteilhafte Ausgestaltungen des Verpackungsmittels sind in den abhängig formulierten Patenansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weiteren Ausführungsvarianten der Erfindung aufgezeigt werden.

Hier beschrieben werden soll ein Verpackungsmittel vorzugsweise für ein Lebensmittelprodukt aufweisend mindestens einen zweidimensionalen grafischen Code zur Speicherung und Bereitstellung von Produktinformationen über das Produkt, wobei der zweidimensionale grafische Code zumindest teilweise mindestens einen veränderlichen Farbstoff und eine Aktivierungsbarriere umfasst, wobei der mindestens eine veränderliche Farbstoff dazu eingerichtet ist, seine Sichtbarkeit in Abhängigkeit einer einwirkenden Temperatur zu verändern, wenn die Aktivierungsbarriere deaktiviert wurde.

Das Verpackungsmittel des Lebensmittelprodukts kann jede beliebige Verpackung für ein Lebensmittelprodukt oder jeder beliebige Bestandteil einer Verpackung für ein Lebensmittelprodukt sein. Die Verpackung ist beispielsweise ein Karton oder eine Schachtel für ein Lebensmittelprodukt, auf welcher der genannte zweidimensionale grafische Code aufgetragen ist. Auch denkbar ist, dass die Verpackung ein Etikett ist, welches auf einer Verpackung eines Lebensmittelprodukts aufgebracht sein kann, beispielsweise ein Klebeetikett. Ein Verpackungsmittel in diesem Sinne kann ggf. auch direkt an dem fraglichen Produkt befestigt sein.

Der zweidimensionale grafische Code umfasst insbesondere einen QR-Code (QR = quick response). QR-Codes sind zweidimensionale grafische Codes, welche auf Entwicklungen der Firma Denso Waves zurückgehen. QR-Codes beinhalten eine binär codierte Information, die in Form von quadratischen Pixeln angeordnet in einer zweidimensionalen Matrix für ein Lesegerät lesbar ist. QR-Codes weisen jeweils Positionsmarkierungen auf, welche die Außenabmessungen und die Ausrichtung des QR-Codes erkennen lassen und die Einlesbarkeit mit einem Lesegerät ermöglichen. QR-Codes weisen darüber hinaus Synchronisationsmuster auf, welche ein Raster der quadratischen Pixel des QR-Codes definieren. In einem QR-Code kann eine beliebige Information binär abgespeichert werden. Je nach Größe des QR-Codes sind unterschiedliche Informationsmengen ablegbar. Standardisiert sind beispielsweise QR-Codes mit zwischen 21 x 21 und 171 x 171 quadratischen Pixeln.

Ein QR-Code hat üblicherweise eine relativ hohe Fehlertoleranz. Ein QR-Code kann von einem elektronischen Lesegerät insbesondere auch dann ausgewertet werden, wenn Teile des QR-Codes nicht mehr genau erkennbar sind. Je nach Informationsdichte in dem QR-Code können die Informationen in dem QR-Code vollständig rekonstruiert werden, wenn beispielsweise 25 % des QR-Codes nicht lesbar sind. QR-Codes sind daher für den beschriebenen zweidimensionalen grafischen Code auf der Verpackung für ein Lebensmittelprodukt besonders vorteilhaft, weil der zweidimensionale grafische Code beispielsweise durch den Transport und die Lagerung des Lebensmittelprodukts (beispielsweise mechanisch) beschädigt werden kann. Die Rekonstruierbarkeit des QR-Codes ermöglicht es, Informationen aus dem QR-Code dann trotzdem noch auszuwerten.

Die bei der beschriebenen Verpackung in dem zweidimensionalen grafischen Code gespeicherte Produktinformation kann beispielsweise eine in einem QR-Code gespeicherte Information über die Frische eines Lebensmittelprodukts umfassen und insbesondere eine Information über die Einhaltung einer Kühlkette des Lebensmittelproduktes. Die Produktinformation kann insbesondere auch eine Information beinhalten, wie weitere in dem zweidimensionalen grafischen Code abgelegte Informationen zu interpretieren sind.

Der zumindest eine veränderliche Farbstoff des QR-Codes kann auch als thermochromer Farbstoff bezeichnet werden. Der Begriff "veränderlicher Farbstoff" beschreibt insbesondere, dass dieser Farbstoff mindestens eine der folgenden Eigenschaften in Abhängigkeit von einer Temperatur ändern kann:
- Kontrast
- Helligkeit
- Färbung
- Sättigung

Die Veränderung des Farbstoffs kann reversibel (reversibel veränderlicher Farbstoff) oder irreversibel (irreversibel veränderlicher Farbstoff) sein. Ein reversibel veränderlicher Farbstoff geht in seinen Ursprungszustand zurück, wenn die Temperatur wieder eine (vormals vorliegende) Ausgangstemperatur erreicht. Ein irreversibel veränderlicher Farbstoff verbleibt in seinem veränderten Zustand, wenn eine Temperatur nach einer Veränderung des Farbstoffs wieder eine (vormals vorliegende) Ausgangstemperatur erreicht. Bevorzugt ist hier die Verwendung von mindestens einem irreversibel veränderlichem Farbstoff, weil durch Verwendung eines irreversibel veränderlichen Farbstoffes ein Überschreiten von Grenztemperaturen unabhängig davon festgehalten und erkannt werden kann, ob nachträglichen eine Ausgangstemperatur wieder erreicht wird oder nicht.

Der Farbstoff ist besonders bevorzugt ein Naturfarbstoff, der im Lebensmittelbereich eingesetzt werden kann, ohne toxische Wirkung zu haben. Der veränderliche Farbstoff ist insbesondere gemäß der EU-Verordnung Nummer 1333/2008 und den entsprechenden aktualisierten Anhängen für Lebensmittel zugelassen und besitzt eine E-Nummer. Dies gilt besonders bevorzugt auch für alle Komponenten des Farbstoffs, die vorzugsweise ebenfalls jeweils eine E-Nummer besitzen sollten. Der veränderliche Farbstoff umfasst vorzugsweise mindestens ein Biopolymer, mindestens einen Naturfarbstoff sowie mindestens ein Reaktionsmedium ausgewählt aus der Gruppe der Fettsäuren und deren Derivate, Gallussäure und deren Derivate sowie Mischungen hiervon.

Details zu dem veränderlichen Farbstoff können beispielsweise aus der internationalen Patentanmeldung WO 2014/044462 A1 entnommen werden, deren Inhalt hier vollumfänglich in Bezug genommen wird.

Bevorzugt werden Naturfarbstoffe mit einer Anthocyanidinstruktur verwendet. Solche Naturfarbstoffe unterteilen sich in zuckerfreie Aglycone und Glykoside. Dabei können beide Unterstrukturen eingesetzt werden. Anthocyanidine sind als Lebensmittelzusatzstoffe unter der E-Nummer 163 zugelassen.

Bevorzugte Anthocyanidine sind Cyanidin, Delphinidin, Aurantinidin, Petunidin, Peonidin, Malvidin, Pelargonidin, Rosinidin, Europinidin und Luteolinidin. Ermöglicht wird die Bildung von Dimeren, Aggregaten/Chelaten sowohl untereinander als auch mit dem Biopolymer oder dem Reaktionsmedium.

Als Reaktionsmedium bevorzugt sind Gallussäure und deren Derivate, insbesondere Gallate, gesättigte, einfach ungesättigte oder mehrfach ungesättigte Fettsäuren und deren Derivate, insbesondere Ester, sowie verzweigte Carbonsäuren. Ein wichtiges Eigenschaftsmerkmal der Carbonsäuren ist deren Selbstorganisation zu Dimeren. Viele verschiedene Fettsäuren können zur Ausbildung der Thermochromie genutzt werden. Vorteilhafterweise lassen sich thermochrome Eigenschaften in einem breiten Arbeitsbereich herstellen. Der Eigenschaftsbereich der thermochromen Eigenschaften ist unter anderem mit dem Schmelzpunkt der Fettsäuren gekoppelt und lässt sich über diesen Schmelzpunkt beispielsweise zwischen -55 °C und + 81 °C durch die Auswahl und Beeinflussung von spezifischen Fettsäuren steuern. Bei Bedarf kann der Arbeitsbereich noch ausgeweitet werden.

Als Fettsäuren können sowohl ungesättigte als auch gesättigte Fettsäuren sowie Mischungen hiervon verwendet werden. Die ungesättigten Fettsäuren sind vorzugsweise ausgewählt aus folgender Gruppe: Petroselinsäure, Palmitoleinsäure, Myristoleinsäure, Ölsäure, Elaidinsäure, Gadoleinsäure, Undecylensäure, Icosensäure, Vaccensäure, Cetoletnsäure, Erucasäure, Nervonsäure, Cervonsäure, Clupanodonsäure, Timnodonsäure, Linolsäure, Calendulasäure, Punicinsäure, Elaeostearinsäure , Arachidonsäure und Mischungen hiervon.

Die gesättigten Fettsäuren sind vorzugsweise ausgewählt aus folgender Gruppe: Ameisensäure, Essigsäure, Caprylsäure, Pelargonsäure, Caprinsäure, Laurinsäure, Myristinsäure, Palmitinsäure, Margarinsäure, Stearinsäure, Arachinsäure, Propionsäure, Buttersäure, Valeriansäure, Capronsäure, Önanthsäure, Behensäure, Lignocerinsäure, Cerotinsäure, Montansäure, Melissinsäure und Mischungen hiervon.

Der Fachmann versteht, dass hier auch eine Vielzahl von Strukturderivaten genutzt werden können, beispielsweise Alpha-, Gamma- oder Beta-Strukturen oder auch Ester-, Amin- oder Amidstrukturen. Es ist für den Fachmann ohne weiteres erkennbar, dass die Fettsäuren oder ihre Derivate auch in Form von Gemischen verwendet werden können. Insbesondere Ester der Stearinsäure, Palmitinsäure, Linolsäure, Erucasäure sind besonders komplexstabilisierend. Fettsäuren und Fettsäureester werden in der Lebensmittelbranche mit den Nummern E 570 bzw. E 304 bezeichnet.

Neben Fettsäuren sind Gallussäure und deren Derivate, besonders Esterverbindungen (Gallate), für den Einsatz als Reaktionsmedium bevorzugt. Mischungen aus Fettsäuren und Galiaten sind ebenfalls einsetzbar. Gallate sind auch wie die Fettsäuren für Lebensmittel zugelassen. Insbesondere sollen E 312 - Dodecylgallat, E 311 - Octylgallat und E 310 - Propylgallat genannt werden.

Die thermochromen Eigenschaften des Farbstoffs werden ermöglicht durch die physikochemische Wechselwirkung zwischen Anthocyanidin, Biopolymer und Fettsäure. Ein temperaturgesteuerter Protonentransfer in der Anthocyanidinstruktur löst die Änderung der Farbe aus. Dabei kann sowohl die Intensität als auch das Wellenlängenmaximum geschaltet werden. So können thermochrome Schalteffekte mit Hilfe der folgenden Mechanismen erzielt werden
i) der Ausbildung oder Auflösung von Wasserstoffbrücken im System,
ii) der Bildung von Domänen/Aggregaten/Chelaten, gesteuert vorzugsweise durch die Wechselwirkung der Fettsäure oder Gallate mit der polaren Polymerkette, z. B. mit CA/CT A, PHB oder PLA,
iii) der Ausbildung geordneter Strukturen zwischen Biopolymer - Naturfarbstoff - Fettsäure und/oder Gallat, wie diese als selbstorientierende Systeme in Biomaterialien gut bekannt sind (siehe H. Ringsdorf, Angew. Chem. 104, 1990, 1310), oder
iv) durch das Zusammenwirken der oben genannten drei Effekte i), ii) und iii).

Der thermochrome Schalteffekt kann mit Hilfe dieser Mechanismen reversibel oder irreversibel gestaltet werden. In Abhängigkeit der Temperatur erfolgen Umorientierungen auf molekularer Ebene. Dabei werden Bindungen verstärkt oder gelockert und es wird ein Konzentrationsgradient des Naturfarbstoffes oder der Fettsäure und/oder Galiat in einem Polymervolumen des Farbstoffes, reversibel oder irreversibel ermöglicht. Dabei ändert sich die Wechselwirkung zwischen der Fettsäure und dem Anthocyanidin in Abhängigkeit der Temperatur, während gleichzeitig beide Verbindungen entweder jeweils einzeln oder als agierender Komplex mit der Polymerkette ihre Wechselwirkung ändern. Im Einzelfall werden alle Verbindungen in die Polymerstruktur über physikochemische Wechselwirkungen integriert, wobei diese sich dabei verändert. In diesem Fall bildet sich in dem Farbstoff eine neue, übergeordnete Polymerstruktur, die sich nicht weiter herunterbrechen lässt. Die Wechselwirkungen zwischen den unterschiedlichen Molekülen können sowohl über die polaren als auch dispersiven Struktureinheiten ausgelöst werden. Das System erhält dadurch eine sehr gute thermodynamische Stabilität. Im Resultat ändern sich die optischen makroskopischen Eigenschaften des Farbstoffs.

Das molare Verhältnis zwischen den Ausgangsverbindungen Anthocyanidin und Fettsäure und/oder Gallat, einschließlich deren Derivaten und Mischungen, steuert insbesondere den Protonentransfer im Naturfarbstoff und somit das thermochrome Verhalten. Im Folgenden werden hinsichtlich der Verarbeitung Massenverhältnisse angegeben. Bei Verwendung von Mischungen aus Fettsäuren und Gallaten können Verhältnisse von 1:99 oder 99:1 eingesetzt werden. Fettsäure oder Gallat oder deren Mischung werden hinsichtlich des Anthocyanidinfarbstoff im 10-fachen bis 50-fachen Überschuss eingesetzt, vorzugsweise mit 15- bis 35-fachem Überschuss. Der Anthocyanidin- Fettsäure(und/oder Gallat)-Komplex befindet sich mit 2 bis 38 Prozent im Biopolymer, vorzugsweise mit 7 bis 15 Prozent. Weitere Einflussgrößen auf das makroskopische optische Verhalten sind die Molmasse, der MFR-Wert und die kristalline/amorphe Struktur der im Farbstoff eingesetzten Biopolymere.

Durch die Aktivierungsbarriere wird verhindert, dass die Temperatureinwirkungen auf den veränderlichen Farbstoff sich auswirken können, bevor die Verpackung des Lebensmittelprodukts tatsächlich mit dem Lebensmittelprodukt befüllt wird. Das Verpackungsmittel des Lebensmittelprodukts soll insbesondere transportiert, gefertigt und bereitgestellt werden können, ohne dass besondere Vorsichtsmaßnahmen notwendig sind und ohne dass die für das Lebensmittelprodukt geltende Kühlkette bereits vor Deaktivierung der Aktivierungsbarriere für das Verpackungsmittel eingehalten werden muss. Die Aktivierungsbarriere ist insbesondere so gestaltet, dass diese deaktiviert werden kann, sobald das Lebensmittelprodukt in der Verpackung aufgenommen wurde. Ab dann ist eine Überwachung der Kühlkette erforderlich. Die Deaktivierung der Aktivierungsbarriere erfolgt vorzugsweise aktiv durch entsprechende Maßnahmen eines Anwenders des beschriebenen Verpackungsmittels.

Wie beschrieben ist das Produkt, welches mit dem Verpackungsmittel verpackt wird, und das mit Hilfe des Verpackungsmittels überwacht wird, bevorzugt ein Lebensmittelprodukt. Das Verpackungsmittel ist aber auch für andere Arten von Produkten einsetzbar, die sensibel gegenüber auftretenden Temperaturen sind. Hierzu zählen beispielsweise auch Lacke, Lösungsmittel und Schmierstoffe, die mit dem Verpackungsmittel verpackt sein können. Wenn das Verpackungsmittel für derartige Produkte eingesetzt wird, ist regelmäßig nicht erforderlich, dass die verwendeten veränderlichen Farbstoffe lebensmittelverträglich sind. Es können dann auch veränderliche Farbstoffe verwendet werden, die in der Lebensmitteltechnik nicht einsetzbar wären und die eventuell giftig oder toxisch sind.

Besonders bevorzugt ist das Verpackungsmittel, wenn die Aktivierungsbarriere eine Schutzschicht umfasst, die den veränderlichen Farbstoff schützt, wobei die Schutzschicht zur Deaktivierung der Aktivierungsbarriere entfernt wird.

Eine derartige Schutzschicht kann insbesondere die molekulare Verbindung des veränderlichen Farbstoffs fixieren, so dass unabhängig von der auf den Farbstoff einwirkenden Temperatur eine Veränderung des Farbstoffs nicht auftreten kann. Besonders bevorzugt ist die Schutzschicht eine Schutzfolie, die von einem Anwender des beschriebenen Verpackungsmittels manuell entfernt werden kann.

Weiterhin vorteilhaft ist das Verpackungsmittel, wenn die Aktivierungsbarriere eine chemische Komponente in dem veränderlichen Farbstoff umfasst.

Eine derartige chemische Komponente in dem veränderlichen Farbstoff kann beispielsweise eine besonders starke und unabhängige chemische Bindung in dem Farbstoff sein, die durch Temperatur nicht beeinflusst wird und die eine weitere, temperatursensible chemische Bindung dauerhaft fixiert. Die temperatursensible chemische Verbindung ist dabei dann für die temperaturabhängige Veränderbarkeit des Farbstoffs verantwortlich. Sobald die dauerhafte, temperaturabhängige Verbindung durch eine weitere Einflussgröße (einen Einfluss neben der Temperatur) entfernt wurde, kann die temperatursensible Verbindung als aktiviert betrachtet werden. Ab diesem Zeitpunkt ist die Aktivierungsbarriere dann deaktiviert. Eine entsprechende Temperaturveränderung nach der Deaktivierung (insbesondere eine Temperaturerhöhung) bewirkt dann beispielsweise eine Auflösung der temperatursensiblen Verbindung, so dass die Farbe des veränderlichen Farbstoffs sich temperaturabhängig verändert.

Besonders vorteilhaft ist die Verpackung, wenn die Aktivierungsbarriere durch die Einwirkung von Strahlung deaktivierbar ist.

Beispielsweise kann die Aktivierungsbarriere eine Schutzschicht umfassen, die durch Strahlung zerstört wird. Es ist auch möglich, dass eine chemische Komponente in dem Farbstoff durch Strahlung verändert wird, um die Aktivierungsbarriere zu deaktivieren.

Besonders bevorzugt ist, wenn die Aktivierungsbarriere durch ultraviolette Strahlung deaktiviert wird. Ultraviolette Strahlung tritt in dem normalen Betrieb eines Verpackungsmittels nicht bzw. nur in einem begrenzten Maße auf. Entsprechende Geräte zur Deaktivierung der Aktivierungsbarriere mit Hilfe von UV-Strahlung können dem Anwender der beschriebenen Verpackung bereitgestellt werden.

Beispielsweise kann im Rahmen der Deaktivierung der Aktivierungsbarriere eine chemische Verbindung in dem Farbstoff mit Hilfe von UV-Licht verändert werden, um in einem Zustand versetzt zu werden, in dem die weiter oben beschriebenen thermochromen Eigenschaften des Farbstoffes vorliegen.

In einer weiteren Ausführungsvariante kann eine Schutzschicht, welche als Aktivierungsbarriere wirkt, mit Hilfe von UV-Licht zerstört oder verändert werden, so dass die thermochromen Eigenschaften des Farbstoffes aktiv werden.

In einer weiteren Ausführungsvariante ist die Aktivierungsbarriere der Verpackung mit Hilfe von mindestens einem Medium deaktivierbar.

Ein derartiges Medium kann beispielsweise ein Gas sein, welches während des Transports von Lebensmittelprodukten eingesetzt wird, um Lebensmittelprodukte frisch zu halten. Ein solches Gas ist beispielsweise ein Gemisch aus Ethen und Stickstoff, das zum Reifen von Bananen eingesetzt wird. Ein solches Gas tritt in der Nähe von der beschriebenen Verpackung für ein Lebensmittelprodukt nur dann auf, wenn sich das genannte Lebensmittelprodukt bereits in der Verpackung befindet. Eine Aktivierungsbarriere, die in Abhängigkeit eines derartiges Gases deaktivierbar ist, ermöglicht es, eine Deaktivierung der Aktivierungsbarriere auch passiv zu erreichen, ohne dass ein Anwender der Verpackung hierfür aktiv eingreifen muss bzw. ohne dass zusätzliche Maßnahmen notwendig sind.

Weiterhin vorteilhaft ist die Verpackung, wenn der zweidimensionale grafische Code einen QR-Code umfasst, der sich unabhängig von der einwirkenden Temperatur nicht verändert.

Ein solcher QR-Code kann beispielsweise eine Information enthalten, wie der zweidimensionale grafische Code an der Verpackung des Lebensmittelprodukts zu interpretieren bzw. zu verwenden ist. Ein solcher QR-Code kann beispielsweise einen Hinweis darauf enthalten, welcher Farbwert eines weiteren Abschnitts des zweidimensionalen grafischen Codes welche Information über die Kühlkette des Lebensmittelproduktes beinhaltet. Ein derartiger QR-Code kann mit einem beliebigen hierfür vorgesehenen Lesegerät gelesen werden. Ein solches Lesegerät kann beispielsweise eine Applikation auf einem Mobiltelefon umfassen.

Weiterhin vorteilhaft ist die Verpackung, wenn der zweidimensionale grafische Code einen QR-Code umfasst, der in Abhängigkeit der einwirkenden Temperatur sichtbar oder unsichtbar wird.

Ein solcher QR-Code kann beispielsweise einen Warnhinweis beinhalten, welcher sichtbar wird, sobald die Kühlkette des Lebensmittelprodukts unterbrochen wurde. Ein solcher QR-Code kann auch einen Hinweis auf die Güte des Produkts sein, der solange sichtbar bleibt, wie die Kühlkette des Lebensmittelprodukts ununterbrochen aufrechterhalten wurde.

Weiterhin vorteilhaft ist die Verpackung, wenn der zweidimensionale grafische Code einen QR-Code umfasst, wobei eine in dem QR-Code lesbar abgelegte Produktinformation sich in Abhängigkeit einer wirkenden Temperatur ändert.

Vorzugsweise erhält ein Anwender des beschriebenen Verpackungsmittels eine erste Produktinformation, wenn die Kühlkette des Lebensmittelprodukts eingehalten wurde und der Anwender den QR-Code einliest. Vorzugsweise erhält der Anwender des Lebensmittelprodukts eine zweite Produktinformation, wenn die Kühlkette des Lebensmittelprodukts unterbrochen war.

Ein solcher QR-Code mit einer veränderbaren Produktinformation in Abhängigkeit einer wirkenden Temperatur bzw. in Abhängigkeit von der Einhaltung einer Kühlkette eines Lebensmittelprodukts ermöglicht insbesondere auch eine automatische Verarbeitung einer Information über die Kühlkette des Lebensmittelprodukts in einer Logistikkette zur Herstellung, zum Transport und zur Bereitstellung des Lebensmittelprodukts. Insbesondere ist es möglich, den derartigen QR-Code unabhängig davon einzulesen, ob dieser eine erste Produktinformation oder eine zweite Produktinformation beinhaltet und beispielsweise verschiedene Preisstufen für das Lebensmittelprodukt in Abhängigkeit hiervon automatisch festzulegen oder das Lebensmittelprodukt zu entsorgen.

Besonders bevorzugt ist die Verpackung, wenn der mindestens eine veränderliche Farbstoff des zweidimensionalen grafischen Codes einen ersten Farbstoff umfasst, dessen Sichtbarkeit bei einer Temperatur oberhalb einer Schalttemperatur zunimmt.

Weiterhin vorteilhaft ist, wenn der mindestens eine veränderliche Farbstoff des zweidimensionalen grafischen Codes einen zweiten Farbstoff umfasst, dessen Sichtbarkeit bei einer Temperatur oberhalb einer Schalttemperatur abnimmt.

Besonders vorteilhaft ist der zweidimensionale grafische Code, wenn sowohl ein beschriebener erster Farbstoff als auch ein beschriebener zweiter Farbstoff vorhanden sind.

Die Sichtbarkeit bei einer Temperatur oberhalb einer Schalttemperatur kann sich wahlweise schlagartig oder kontinuierlich verändern.

Eine schlagartige oder kontinuierliche Veränderung kann beispielsweise mit Hilfe von entsprechend ausgebildeten temperaturabhängig veränderbaren chemischen Verbindungen innerhalb des Farbstoffs realisiert sein. Verbindungen, die sich sofort auflösen oder die sofort entstehen, sobald die Temperatur die Schalttemperatur erreicht, sind für schlagartig schaltende thermochrome Farbstoffe geeignet. Kontinuierliche veränderbare Farbstoffe haben vorzugsweise Verbindungen, die sich unter Einwirkung der Temperatur kontinuierlich (beispielsweise statistisch) auflösen oder entstehen. Beispielsweise kann durch gezielte Wahl der einzelnen Bestandteile des Farbstoffs eine kontinuierliche Veränderung bei Temperaturen oberhalb einer Schalttemperatur erfolgen, wobei erst nach (beispielsweise) 30 Minuten eine vollständige Veränderung des Farbstoffes stattgefunden hat.

Für einen QR-Code, dessen enthaltene Produktinformation sich in Abhängigkeit einer wirkenden Temperatur verändert, ist es regelmäßig erforderlich, dass sowohl ein erster Farbstoff als auch ein zweiter Farbstoff vorhanden sind, wobei die Schalttemperatur beider Farbstoffe identisch ist. Für die freie Festlegung der ersten und der zweiten Produktinformation ist dies von großer Bedeutung, weil für diese freie Festlegung der Produktinformation die verschiedenen quadratischen Pixel des QR-Codes je nach enthaltener Produktinformation unabhängig von sonstigen Randbedingungen festlegbar sein müssen. Insgesamt sind für einen solchen QR-Code üblicherweise drei verschiedene Farbstoffe erforderlich:
- ein konstanter Farbstoff, der unabhängig von der Schalttemperatur sichtbar ist,
- ein erster Farbstoff, der bei der Schalttemperatur auf sichtbar schaltet, und
- ein zweiter Farbstoff, der bei der Schalttemperatur von sichtbar auf unsichtbar schaltet.

Gemäß einer weiteren Ausführungsvariante sind zwei QR-Codes nebeneinander angeordnet, wobei ein QR-Code verschwindet, wenn eine Schalttemperatur erreicht wird, wobei ein weiterer QR-Code erscheint, wenn eine Schalttemperatur erreicht wird. Dabei enthält ein QR-Code eine erste Produktinformation während der andere QR-Code eine zweite Produktinformation enthält. Dies ermöglicht ein sehr ähnliches Verhalten wie mit nur einem veränderbaren QR-Code, der wahlweise eine erste Produktinformation oder eine zweite Produktinformation bereithält. Ein Lesegerät kann dazu eingerichtet sein automatisch einen QR-Code auf dem Verpackungsmittel zu suchen. Das Lesegerät wird dann jeweils den entsprechenden sichtbaren QR-Code auf dem Verpackungsmittel suchen. Wenn das Lesegerät zwei QR-Codes erkennt oder gar keinen QR-Code findet, kann eine Fehlermeldung ausgegeben werden. Dies kann beispielsweise dann auftreten, wenn die Schalttemperaturen der ersten Farbstoffe und der zweiten Farbstoffe, die für die QR-Codes verwendet wurden, sich nicht genau entsprechen. Der Vorteil der Variante mit zwei QR-Codes für die erste Produktinformation und die zweite Produktinformation besteht vor allem darin, dass kein zusätzlicher (dritter) konstanter Farbstoff notwendig ist. Darüber hinaus ist gegebenenfalls eine höhere Fehlertoleranz des Systems möglich. Vorzugsweise sind die beiden QR-Codes eines solchen Systems sehr nah beieinander angeordnet, um einem Lesegerät das einfache Auffinden der QR-Codes zu ermöglichen.

Besonders bevorzugt ist die Anwendung des beschriebenen Verpackungsmittels in einem Verfahren zur Überwachung der Kühlkette eines Lebensmittelproduktes aufweisend die folgenden Schritte:
a) Bereitstellen eines beschriebenen Verpackungsmittels;
b) Befüllen des Verpackungsmittels mit einem Lebensmittelprodukt;
c) Deaktivieren einer Aktivierungsbarriere eines zweidimensionalen grafischen Codes der Verpackung;
d) Bereitstellen einer ersten Produktinformation mit dem zweidimensionalen grafischen Code, wenn eine Temperatur eine Schalttemperatur nicht überschritten hat; und
e) Bereitstellen einer zweiten Produktinformation mit dem zweidimensionalen grafischen Code, wenn die Temperatur die Schalttemperatur überschritten hat.

Die Erfindung wird nachfolgend anhand der Figuren näher erläutert. Es ist darauf hinzuweisen, dass die Figuren jeweils besonders bevorzugte Ausführungsbeispiele der Erfindung zeigen, auf die diese jedoch nicht begrenzt ist. Insbesondere ist darauf hinzuweisen, dass die Figuren und die in den Figuren dargestellten Größenverhältnissen nur schematisch sind. Es ist darauf hinzuweisen, dass in Verbindung mit den Figuren erläuterte Merkmale beliebig miteinander kombiniert werden können. Die Figuren und die entsprechenden Erläuterungen sollen lediglich verschiedene Beispiele für Merkmale eines beschriebenen Verpackungsmittels liefern. Es zeigen:
- Fig. 1:: eine erste Ausführungsvariante eines beschriebenen Verpackungsmittels vor einer Veränderung des Farbstoffs,
- Fig. 2:: die erste Ausführungsvariante des beschriebenen Verpackungsmittels nach Veränderung des Farbstoffs,
- Fig. 3:: die erste Ausführungsvariante eines beschriebenen Verpackungsmittels vor Deaktivierung der Aktivierungsbarriere,
- Fig. 4:: eine zweite Ausführungsvariante eines beschriebenen Verpackungsmittels vor Veränderung eines Farbstoffs,
- Fig. 5:: eine zweite Ausführungsvariante eines beschriebenen Verpackungsmittels nach Veränderung des Farbstoffs,
- Fig. 6:: eine dritte Ausführungsvariante eines beschriebenen Verpackungsmittels vor Veränderung des Farbstoffs,
- Fig. 7:: eine dritte Ausführungsvariante eines beschriebenen Verpackungsmittels nach Veränderung des Farbstoffs,
- Fig. 8:: ein Ablaufdiagramm eines beschriebenen Verfahrens.

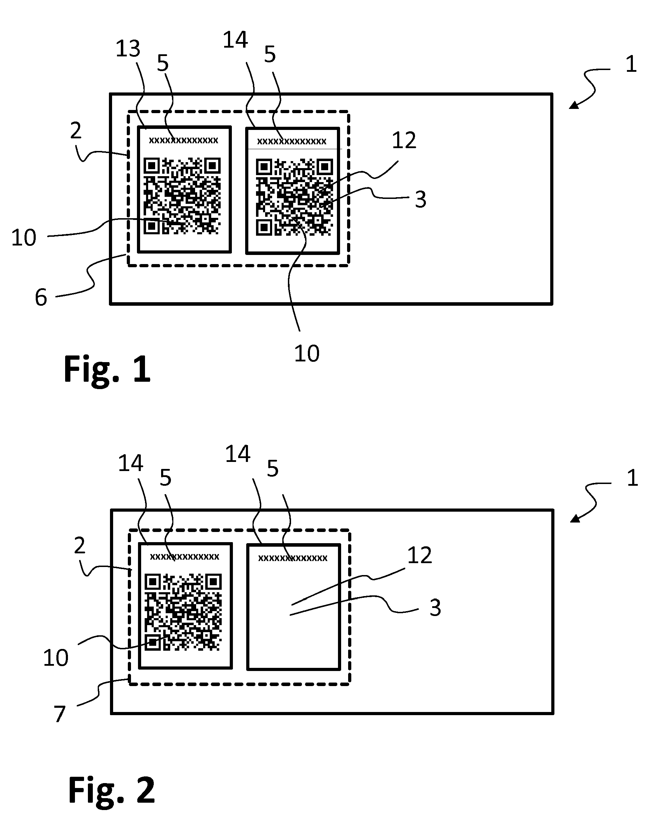

In den Fig. 1 bis 7 ist jeweils ein Verpackungsmittel 1 mit einem zweidimensionalen grafischen Code 2 dargestellt. Gemäß den Ausführungsvarianten in den Fig. 1-3 hat der zweidimensionale grafische Code 2 einen ersten Codeabschnitt 13 und einen zweiten Codeabschnitt 14. In beiden Codeabschnitten 13, 14 befindet sich jeweils ein QR-Code 10 sowie eine lesbare Erläuterung 5, die dem Anwender die Verpackung 1 erläutert. Diese lesbare Erläuterung 5 kann beispielsweise ein Text sein, der in Worten angibt, wie der QR-Code 10 in dem jeweiligen ersten oder zweiten Codeabschnitt 13, 14 angewendet werden soll. Die Erläuterung 5 kann beispielsweise "Bitte einlesen" bedeuten. Der QR-Code 10 in dem ersten Codeabschnitt 13 ist vorzugsweise nicht veränderlich, und unabhängig von der auf den zweidimensionalen grafischen Code 2 wirkenden Temperatur, stellt dieser QR-Code 10 immer die gleiche Information bereit. Hier kann beispielsweise eine maschinenlesbare Erläuterung über die Anwendung des zweidimensionalen grafischen Codes 2 hinterlegt sein. Der zweite QR-Code 10 in dem zweiten Codeabschnitt 14 ist vorzugsweise sichtbar, solange eine Kühlkette des Lebensmittelprodukts in der Verpackung 1 nicht unterbrochen war. Dieser QR-Code 10 kann beispielsweise einen Frischehinweis über die Frische des in dem Verpackungsmittel 1 enthaltenen Lebensmittelprodukts bereitstellen. Dieser QR-Code 10 ist mit einem veränderlichen Farbstoff 3 hergestellt, welcher beispielsweise durch Drucken aufgebracht sein kann. Dieser veränderliche Farbstoff 3 ist vorzugsweise ein zweiter Farbstoff, welcher unsichtbar wird, sobald eine Schalttemperatur überschritten wurde. Es ist auch eine umgekehrte Anwendung denkbar, bei welcher der QR-Code 10 in dem zweiten Codeabschnitt 14 nur sichtbar wird, wenn eine Kühlkette nicht eingehalten wurde. Dann kann dieser QR-Code 10 beispielsweise einen Warnhinweis enthalten, gemäß welchem die Kühlkette für das Lebensmittelprodukt unterbrochen war.

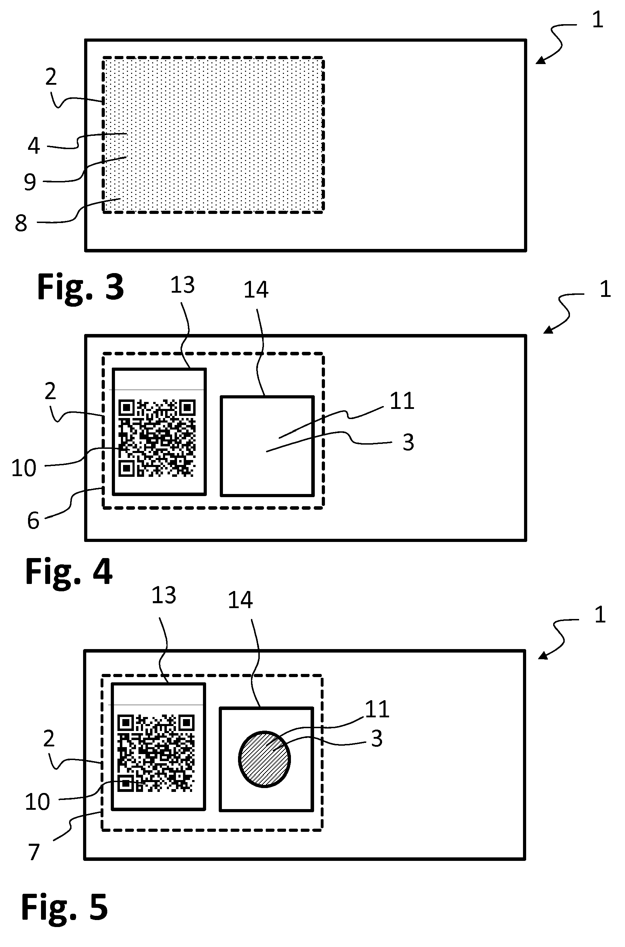

In Fig. 1 ist der QR-Code 10 im zweiten Codeabschnitt 14 sichtbar. In Fig. 2 ist der QR-Code 10 im zweiten Codeabschnitt 14 unsichtbar. Fig. 3 zeigt die Verpackung 1 aus den Fig. 1 und 2, wobei der zweidimensionale grafische Code 2 hier von einer Aktivierungsbarriere 4 abgedeckt ist, die als Schutzschicht 9 bzw. als Schutzfolie 8 ausgeführt ist.

Bei der Aktivierungsbarriere 4 gemäß den Fig. 4 und 5 sind ebenfalls ein erster Codeabschnitt 13 und ein zweiter Codeabschnitt 14 vorgesehen. In dem ersten Codeabschnitt 13 ist ein QR-Code 10 angeordnet, in welchem eine Information über die Anwendung des zweidimensionalen grafischen Codes 2 hinterlegt sein kann. In dem zweiten Codeabschnitt 14 ist lediglich eine punktförmige bzw. flächenförmige Markierung angeordnet, die aus einem veränderlichen Farbstoff 3 gebildet ist, wobei dieser veränderliche Farbstoff 3 ein erster Farbstoff ist, welcher sichtbar wird, sobald eine Schalttemperatur überschritten wurde. Eine solche punktförmige oder flächenförmige Markierung eignet sich insbesondere um auch relative oder gestaffelte Grenztemperaturen im Rahmen einer Kühlkette effektiv zu überwachen. Beispielsweise kann in dem QR-Code 10 aus den Figuren 4 und 5 definiert sein, welche Färbungen der Markierung welchen Temperaturbedingungen während der Kühlkette entsprechen.

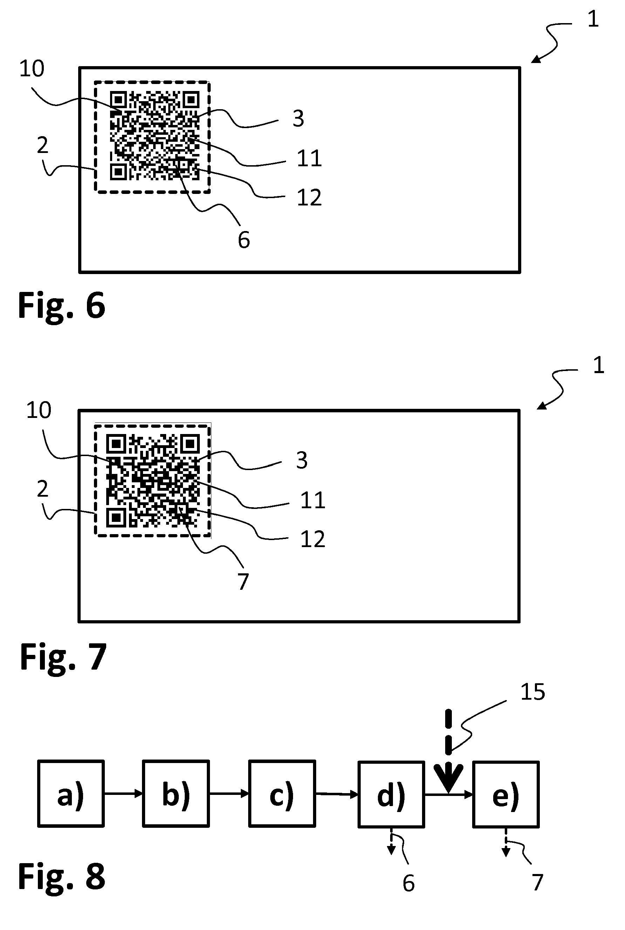

Bei der Aktivierungsbarriere 4 gemäß Fig. 6 hat der zweidimensionale grafische Code 2 lediglich einen QR-Code 10, welcher als veränderlicher Farbstoff 3 sowohl einen ersten Farbstoff 11 als auch einen zweiten Farbstoff 12 umfasst. Dieser QR-Code 10 stellt unterschiedliche Informationen bereit, je nachdem, ob eine Schalttemperatur überschritten wurde oder nicht. In Fig. 6 stellt der QR-Code 10 eine erste Produktinformation 6 bereit. In Fig. 7, wenn eine Schalttemperatur überschritten wurde, stellt der QR-Code 10 eine zweite Produktinformation 7 bereit.

Fig. 8 zeigt ein Ablaufdiagramm eines beschriebenen Verfahrens mit den Verfahrensschritten a) - e), die hintereinander ausgeführt werden. Normalerweise wird im Verfahrensschritt d) eine erste Produktinformation 6 bereitgestellt, solange eine Kühlkette eines Lebensmittelprodukts eingehalten wurde. Sobald eine Schalttemperatur 15 überschritten wurde, wird in Schritt e) eine zweite Produktinformation 7 bereitgestellt.

Die beschriebene Verpackung für ein Lebensmittelprodukt hat große Vorteile, weil eine Information über die Einhaltung einer Kühlkette sehr einfach und anschaulich für den Anwender bereitgestellt wird und gleichzeitig auch eine Verarbeitung einer Information über die Einhaltung der Kühlkette eines Lebensmittelprodukts unproblematisch und automatisiert bei der Logistik des Transports eines Lebensmittelprodukts verwertet werden kann.

### Bezugszeichenliste

- 1: Verpackungsmittel
- 2: zweidimensionaler grafischer Code
- 3: veränderlicher Farbstoff
- 4: Aktivierungsbarriere
- 5: Erläuterung
- 6: erste Produktinformation
- 7: zweite Produktinformation
- 8: Schutzfolie
- 9: Schutzschicht
- 10: QR-Code
- 11: erste Farbstoff
- 12: zweiter Farbstoff
- 13: ersten Codeabschnitt
- 14: zweiter Codeabschnitt
- 15: Schalttemperatur

## Patentansprüche

1. Verpackungsmittel (1) vorzugsweise für ein Lebensmittelprodukt aufweisend mindestens einen zweidimensionalen grafischen Code (2) zur Speicherung und Bereitstellung von Produktinformationen (6, 7) über das Produkt, wobei der zweidimensionale grafische Code (2) zumindest teilweise mindestens einen veränderlichen Farbstoff (3) und eine Aktivierungsbarriere (4) umfasst, wobei der mindestens eine veränderliche Farbstoff (3) dazu eingerichtet ist seine Sichtbarkeit in Abhängigkeit einer einwirkenden Temperatur zu verändern, wenn die Aktivierungsbarriere (4) deaktiviert wurde.

2. Verpackungsmittel (1) nach Anspruch 1, wobei die Aktivierungsbarriere (4) eine Schutzschicht (9) umfasst, die den veränderlichen Farbstoff (3) schützt, wobei die Schutzschicht (9) zur Deaktivierung der Aktivierungsbarriere (4) entfernt wird.

3. Verpackungsmittel (1) nach einem der vorhergehenden Ansprüche, wobei die Aktivierungsbarriere (4) eine chemische Komponente in dem veränderlichen Farbstoff (3) umfasst.

4. Verpackungsmittel (1) nach einem der vorhergehenden Ansprüche, wobei die Aktivierungsbarriere (4) durch die Einwirkung von Strahlung deaktivierbar ist.

5. Verpackungsmittel (1) nach einem der vorhergehenden Ansprüche, wobei die Aktivierungsbarriere (4) durch die Einwirkung eines Mediums deaktivierbar ist.

6. Verpackungsmittel (1) nach einem der vorhergehenden Ansprüche, wobei der zweidimensionale grafische Code (2) einen QR-Code (10) umfasst, der sich unabhängig von der einwirkenden Temperatur nicht verändert.

7. Verpackungsmittel (1) nach einem der vorhergehenden Ansprüche, wobei der zweidimensionale grafische Code (2) einen QR-Code (10) umfasst, der in Abhängigkeit der einwirkenden Temperatur sichtbar oder unsichtbar wird.

8. Verpackungsmittel (1) nach einem der vorhergehenden Ansprüche, wobei der zweidimensionale grafische Code (2) einen QR-Code (10) umfasst, wobei eine in dem QR-Code (10) lesbar abgelegte Produktinformation (6, 7) sich in Abhängigkeit einer wirkenden Temperatur verändert.

9. Verpackungsmittel (1) nach einem der vorhergehenden Ansprüche, wobei der mindestens eine veränderliche Farbstoff (3) des zweidimensionalen grafischen Codes (2) einen ersten Farbstoff (11) umfasst, dessen Sichtbarkeit bei einer Temperatur oberhalb einer Schalttemperatur (15) zunimmt.

10. Verpackung (1) nach einem der vorhergehenden Ansprüche, wobei der mindestens eine veränderliche Farbstoff (3) des zweidimensionalen grafischen Codes (2) einen zweiten Farbstoff (12) umfasst, dessen Sichtbarkeit bei einer Temperatur oberhalb einer Schalttemperatur (15) abnimmt.

11. Verfahren zur Überwachung der Kühlkette eines Lebensmittelproduktes auf weisend die folgenden Schritte:
a) Bereitstellen eines Verpackungsmittels (1) nach einem der vorhergehenden Ansprüche;
b) Befüllen des Verpackungsmittels (1) mit einem Lebensmittelprodukt;
c) Deaktivieren einer Aktivierungsbarriere (8) eines zweidimensionalen grafischen Codes (2) der Verpackung;
d) Bereitstellen einer ersten Produktinformation (6) mit dem zweidimensionalen grafischen Code (2), wenn eine Temperatur eine Schalttemperatur (15) nicht überschritten hat; und
e) Bereitstellen einer zweiten Produktinformation (7) mit dem zweidimensionalen grafischen Code, wenn die Temperatur die Schalttemperatur (15) überschritten hat.
